# EUROPEAN PATENT SPECIFICATION

(11) **EP 1 263 106 B1**
(45) Date of publication and mention of the grant of the patent: **09.03.2005**
(21) Application number: 02253527.2
(22) Date of filing: 20.05.2002
(51) Int. Cl.: H02G 9/06, F16L 7/02

(54) **Apparatus for Sealing a Duct**
Anordnung zum Abdichten eines Rohrs
Dispositif d'étanchéité d'un conduit

(30) Priority: 21.05.2001 GB 0112341
(43) Date of publication of application: 04.12.2002
(73) Proprietor: Polypipe Civils Limited, Loughborough, Leicestershire LE11 ORE (GB)
(72) Inventor: Ramella, Stuart, c/o Polypipe Civils Limited, Loughborough, Leicestershire LE11 5RE (GB)
(74) Representative: Johnson, Terence Leslie

(56) References cited:
- EP-A- 0 307 780
- FR-A- 2 650 049
- GB-A- 2 194 861
- GB-A- 2 262 392

## Description

The invention relates to apparatus for sealing a duct.

A duct which is used particularly in utilities for supply of services such as cabling often comprises a main or host duct through which one or more elongate members of smaller diameter than the host duct, pass. These members may themselves be ducts, or sub ducts, or can be cabling. The members are usually required to be maintained spaced apart, from themselves and from the interior of the main or host duct.

A duct which is of this kind, that is main or host duct with one or more discrete elongate members (hereinafter sub-ducts) passing therethrough, spaced from one another (when there are more than one) and from the main or host duct is herein referred to as "a duct of the kind herein defined".

Such ducts usually require to be sealed, as well as having the sub-ducts maintained in the desired position within the main duct. Sealing is necessary to keep the interior of the duct clean of dirt and debris, and to prevent animals such as rodents gaining access, as they may cause damage by gnawing.

EP0307780 relates to an apparatus for sealing a duct which includes three separate non-orthogonal sealing elements.

It is an object of the invention to provide apparatus which can both seal the duct and maintain elongate members or sub-ducts in a desired position.

According to a first aspect of the invention there is provided apparatus for sealing a duct comprising a flexible element which defines at least a part of a seat for at least one sub-duct or grommet, and which is adapted to mate with a similar element disposed substantially orthogonally thereto, and to be insertable in a main duct and engage the same radially, the flexible element having opposed arcuate portions;
each of which comprises an arcuate body and a depending stem connected to an integral central boss whereby to provide a unitary element.

The element may be integrally formed from a flexible and compressible material. This provides for ease of insertion and sealing.

There may be a stepped boundary edge by which the element may be adapted to mate with a similar element, particularly when the step may be longitudinally of the edge. This provides for a relatively simple assembly of two elements, by longitudinal engagement. The step may be provided adjacent to one end face of the element.

Each arcuate portion may define parts of two seats for a respective sub-duct or grommet.

Each arcuate portion and the boss may have a longitudinally extending through bore, alignable with the respective bores of a similar element whereby to receive connectors. This is a relatively simple construction whereby the connectors may connect the similar elements, and effect sealing. This is particularly so when the connectors may comprise nuts and bolts, one for each bore.

The connectors may also have two bearing plates for each nut and bolt arrangement. These can assist in connection and sealing.

The arcuate portions may include a recess of complementary shape to a bearing plate and adapted to seat same. This provides for positive location of the bearing plate and a neat appearance.

The arcuate portions may include a recess of complementary shape to a valve or similar apparatus and adapted to seal same.

According to a second aspect of the invention there is provided a duct plug comprising apparatus according to the invention, assembled with a similar apparatus.

According to a third aspect of the invention there is provided a duct, with a duct plug according to the invention mounted therein.

The duct plug may be retro-fitted to the duct by bending apart the respective mating arcuate portions, or alternatively by dismantling and then reassembling the duct plug around the sub-ducts.

Apparatus for seating a duct of the kind herein defined is hereinafter described, by way of example, with reference to the accompanying drawings.
Fig. 1 is a perspective view of apparatus embodying the invention;
Fig. 2 is a perspective view of the apparatus of Fig. 1 assembled with a similar apparatus to form a seal, or duct plug, for a duct of the kind herein defined;
Fig. 3 is an exploded perspective view of the duct plug of Fig. 2;
Figs. 4, 5 and 6 are respective plan, end elevational and opposite plan views of the duct plug of Fig. 2;
Fig. 7 is a perspective view of apparatus according to a second embodiment of the invention assembled with a similar apparatus to form a seal, or duct plug, for a duct of the kind herein defined;
Fig. 8 is a cutaway perspective view through A-A"-A"' of the duct plug of Fig. 7;
Fig. 9 is an exploded perspective view of the duct plug of Fig. 7; and
Figs. 10, 11 and 12 are respective end (underside) perspective, and close up opposite end perspective views of the duct plug of Fig. 7.

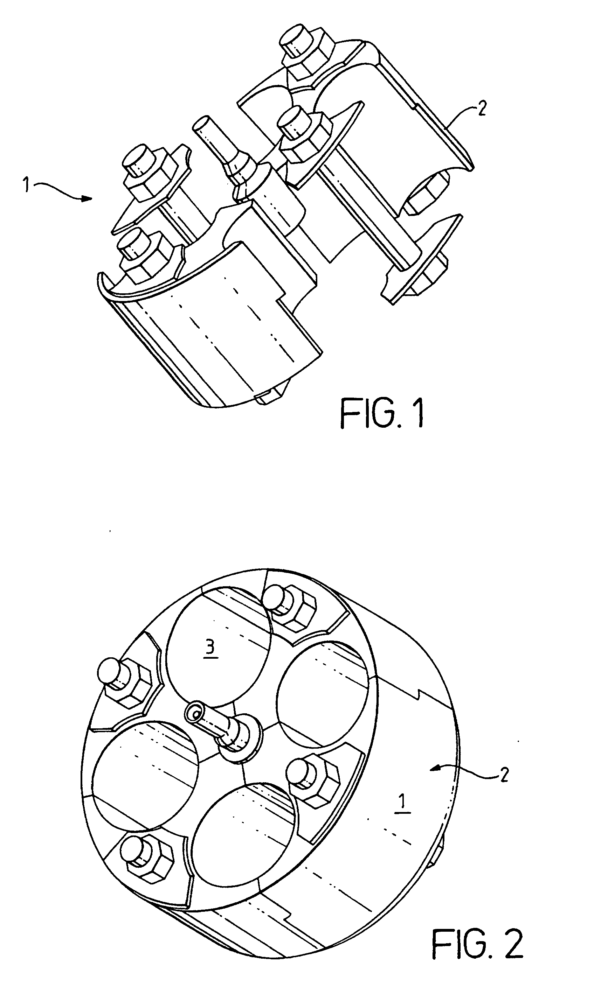

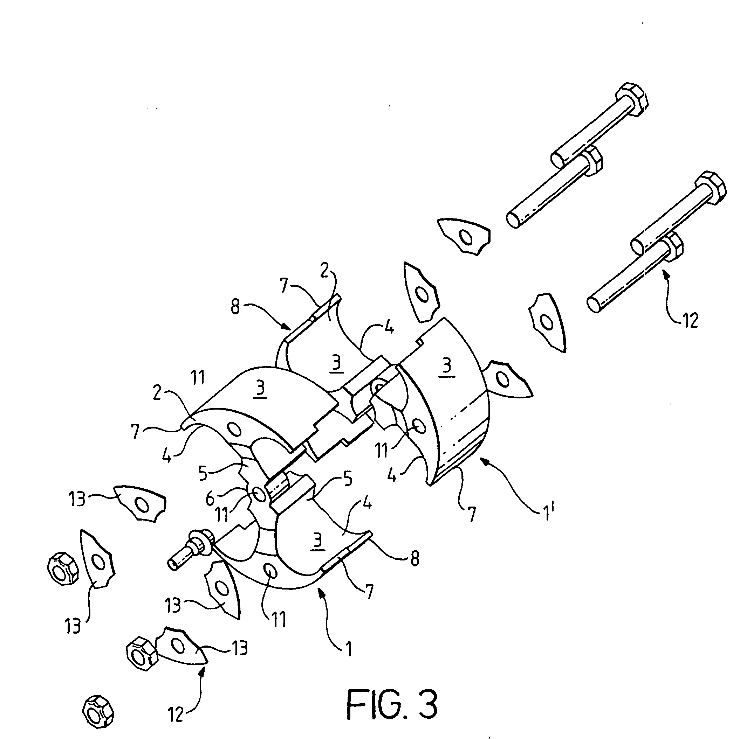

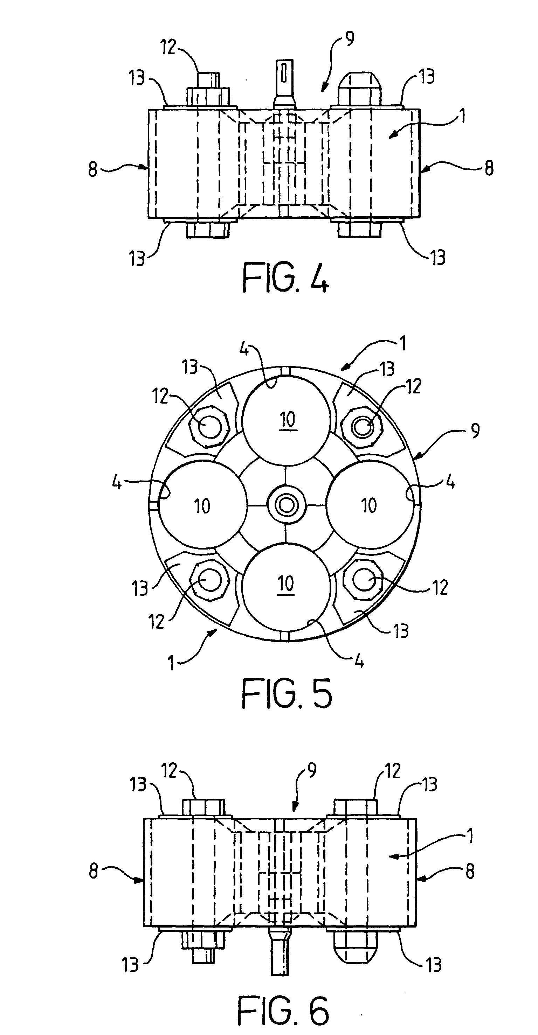

Referring to the drawings, in Figs. 1 to 6 there is shown apparatus 1 for sealing a duct of the kind herein defined, comprising a flexible element 2 having opposed arcuate portions 3 which are adapted to mate with a similar element disposed substantially orthogonally thereto and to be insertable in the main duct and engage same radially, the element 2 defining at least a part of a seat 4 for at least one sub-duct. Alternatively, the seat 4 may be adapted to receive a grommet, which may be filled or may have a through bore through which a cable for example may be passed.

The element 2 is suitably moulded from a rubber or rubber-like material, the arcuate portions 3 each having a depending stem 5 integrally connected to a cental boss 6, the apparatus 1 therefore being of unitary construction.

Each boundary edge 7 of each arcuate portion 3 has, in the longitudinal direction, a step or rebate 8 of L-shape. Stated in another way, one part of each arcuate portion 3 has a less circumferential extent than another. This enables the apparatus 1 to be assembled with another similar apparatus 1' by aligning them longitudinally so that the steps or rebates 8 of one apparatus 1 mate with those of the similar apparatus 1', the steps or rebates 8 being complementary in configuration.

This is clearly shown in Figs. 2 and 4 - 6, where the assembled apparatus 1, 1' form a cylindrical duct plug 9, the part seats 4 defining in the assembled duct plug cylindrical though bores 10 for, in the embodiment, four sub-ducts (not shown).

Each arcuate portion 3 and the boss 6 have through bores 11 for receiving elongate connectors 12 in the form of four nut and bolt arrangements each of which also includes two bearing plates 13 which bear against opposite end faces of the duct plug 9 respectively. They can be received in complementary shaped recesses (not shown) for a positive engagement and an aesthetic appearance. A central through bore 11' is for receiving a valve, rather than a connector.

It will be understood that the outer diameter of the duct plug 9 is such as to enable it to be received with a push fit in the main duct, the diameter of the through bores 10 being such as just to receive the outer diameter of a sub-duct. It will also be understood that the through bores 10 may be of different diameters, and shape, depending on the external shape of a particular sub-duct. Further, if one of a plurality of through bores 10 is not being used, a stopper or cap (not shown) is inserted therein. It will also be understood that a grommet (not shown)may be inserted in a respective through bore 10, the grommet being solid, having a through bore for receiving say a fibre-optic cable, the grommet being a desired specific size for this purpose.

In use the duct plug 9 is assembled and inserted in a main duct with the connectors 12 slackened off. Sub-ducts and/or grommets are then inserted into the main duct and passed through a respective bore 10. The connectors 12 are then tightened up, which squeezes the material of the duct plug 9 between the opposed bearing plates 13, which forces the arcuate surfaces 3 radially into tight sealing engagement with the inner surface of the main duct, and the bores 10 into tight sealing engagement with the respective outer surface of the sub-duct(s), or grommet(s).

In an alternative usage, the duct plug 9 can be retro-fitted to a main duct having sub-ducts installed, by simply bending apart mating arcuate portion 3 to define a gap so that the duct plug can be offered up to the sub-duct(s) and pushed thereover, the mating portion 8 then being re-mated at the rebates. The connectors 12 slackened off during this retro-fit installation, are then tightened up as before. Also, the duct plug 9 can be retro-fitted by being dismantled and reassembled in situ around sub-ducts.

In both cases, the main duct is sealed, as is the area round the sub-ducts which are also maintained in the desired spatial orientation with respect to the main duct and themselves.

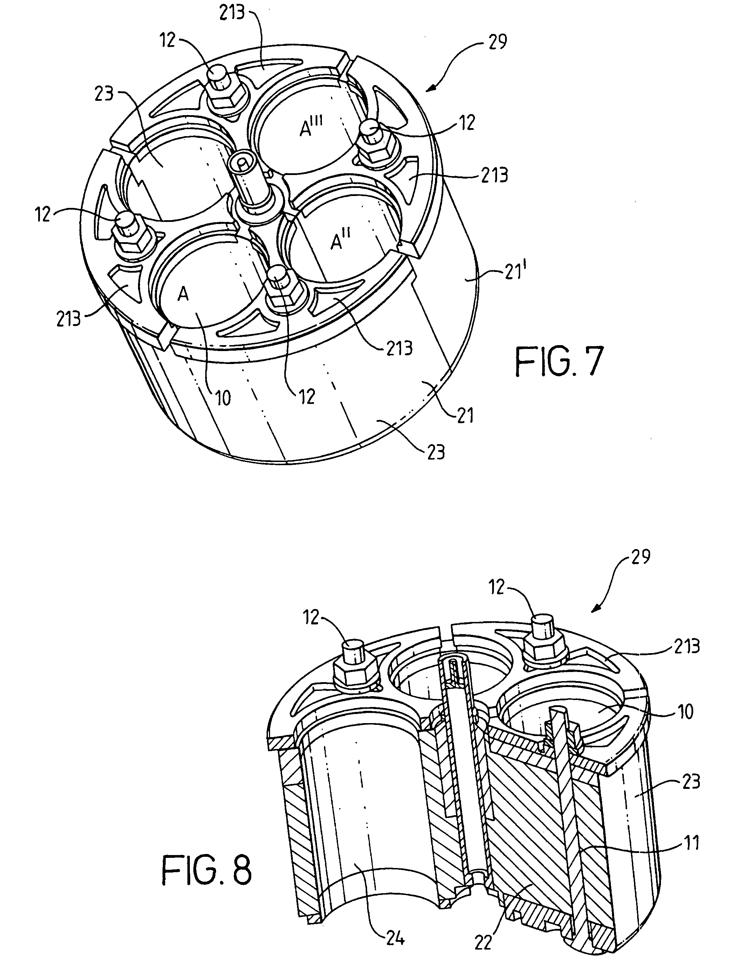

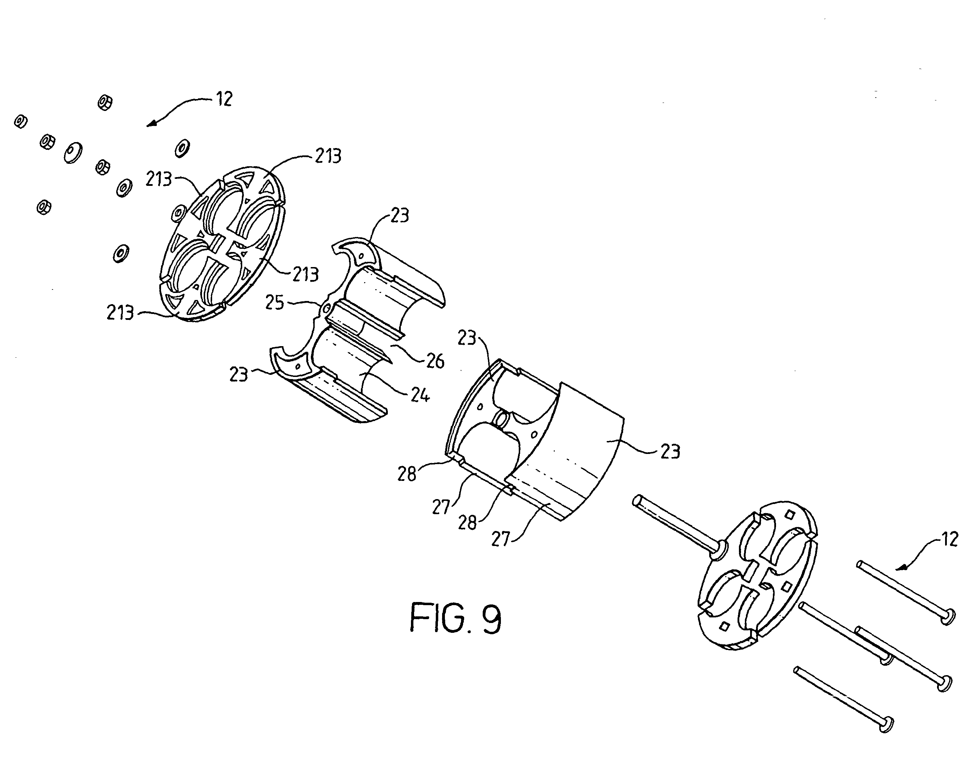

Figures 7 to 12 illustrate apparatus according to a second embodiment of the invention, assembled with a similar apparatus whereby to provide a cylindrical duct plug. The apparatus of the second embodiment is generally similar to the first embodiment, although it differs in certain design features.

The opposed arcuate portions 23 of apparatus 21 each have a depending stem 25 integrally connected to a central boss 26, the apparatus 21 therefore being, as apparatus 1, of unitary construction.

Each boundary edge 27 of each arcuate portion 23 has, in the longitudinal direction, a step or rebate 28 of L-shape the step 28 being provided adjacent to one end face of the element 22. Thus, in the same manner as in the apparatus 1 according to the first embodiment, the steps 28 enable the apparatus 21 to be assembled with another similar apparatus 21' by aligning them longitudinally so that the steps or rebates 28 of one apparatus 21 mate with those of the similar apparatus 21', the steps or rebates 28 being complementary in configuration.

This is clearly shown in Figures 7, 8 and 10 to 12, where the assembled apparatus 21, 21' form a cylindrical duct plug 29, the part seats 24 defining in the assembled duct plug cylindrical through bores 10 for, as in the first embodiment, four sub-ducts (not shown).

The assembly of apparatus 21, 21' to form a duct plug 29, the components of the duct plug according to the second embodiment (for example including elongate connectors 12 in a form of four nut and bolt arrangements) and bearing plates 213, 233 are similar to the assembly arrangement of the first embodiment.

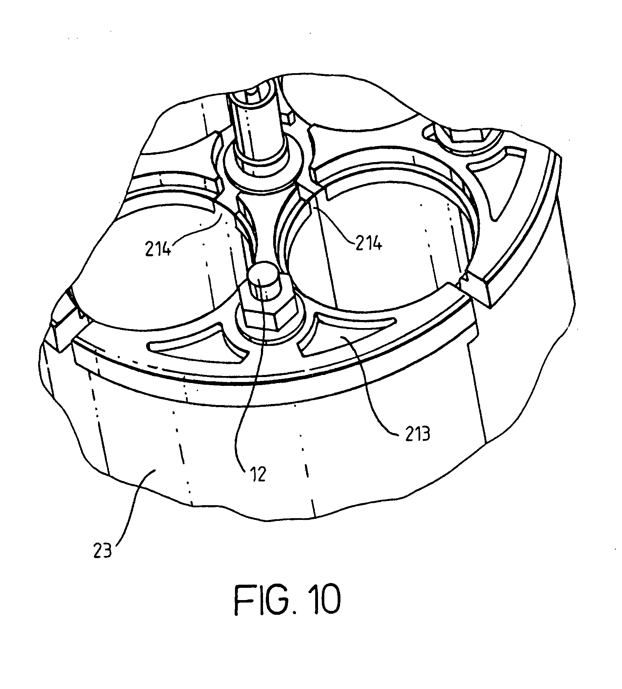

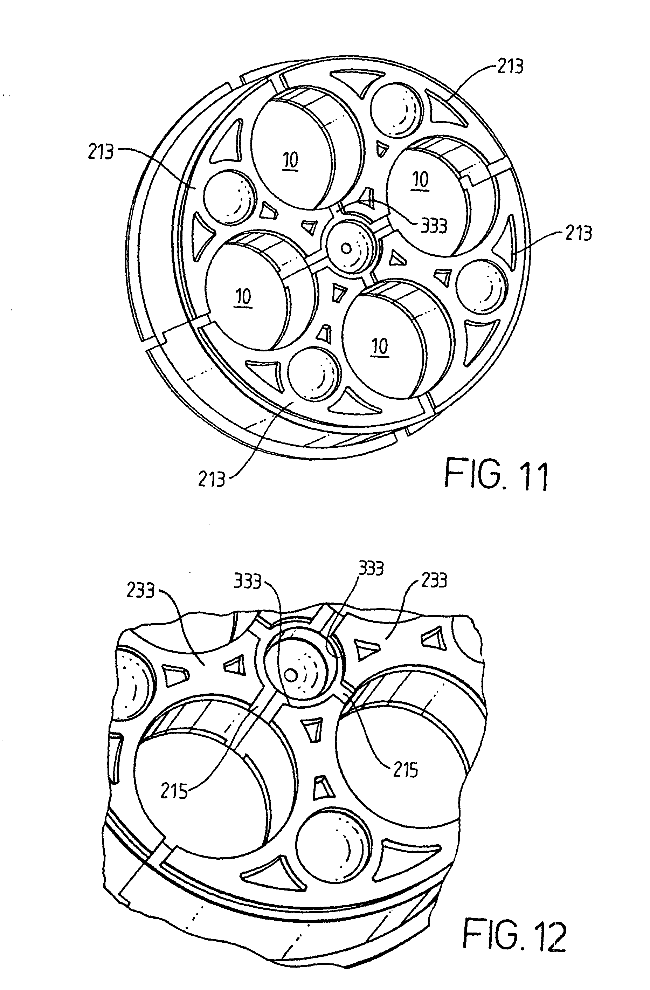

In the second embodiment the elongate connectors 12 each also include two bearing plates 213, 233 which bear against opposite end faces of the duct plug 29 respectively. The bearing plates 213, 233 are received in respective complementary shaped recesses (shown at 214 for one end face of the duct plug in Fig. 10 and at 215 in Fig. 12 for the opposite end face of the duct plug).

The bearing plates 213, 233 which bear against opposite end faces of the duct plug 29 respectively are moulded to provide an aesthetic appearance and may be of different diameters, and shape, depending on the external shape of through bores 10, through bores 11 and elongate connectors 12, for example. The bearing plates may be different shapes for example, bearing plates 213 have a ridge or "lip" extending over the perimeter outer surface of arcuate portion 23, thus in this embodiment the radius of the arc-like shape of bearing plate 213 is greater than the radius of the arc shape of bearing plate 233 and greater than the radius of outer portion 23. Bearing plates 213, 233 can be received in complementary shaped recesses, for example 333, to accommodate and/or provide a positive engagement with a valve or similar apparatus.

In use the duct plug 29 is assembled and inserted in a main duct in the same way as already described herein for apparatus 9 of the first embodiment.

It will be understood that apparatus 1, 21 embodying the invention may be used in applications other than in utility ducts, for example in nano-filtration systems where a plurality of nano-filters are desired to be maintained in parallel in a cylindrical treatment vessel, or say in laboratory equipment where a treatment flask or vessel may have several tubes passing into it which are required to be held and positioned within an entry to the flask or vessel.

## Claims

1. Apparatus (1,21) for sealing a duct comprising a flexible element (2,22) which defines at least a part of a seat (4, 24) for at least one sub-duct or grommet, and which is adapted to mate with a simiiar element disposed substantially orthogonally thereto, and to be insertable in a main duct and engage the same radially, the flexible element (2,22) having opposed arcuate portions (3, 23), each of which comprises an arcuate body and a depending stem (5, 25) connected to an integral central boss (6, 26) whereby to provide a unitary element.

2. Apparatus (1,21) according to Claim 1, the element (2,22) being integrally formed from a flexible and compressible material.

3. Apparatus (1,21) according to Claim 1 or Claim 2, comprising a stepped boundary edge (7,27) by which the element (2,22) is adapted to mate with a similar element (2,22).

4. Apparatus (1,21) according to Claim 3, a step (8,28) being provided longitudinally of the edge (7,27).

5. Apparatus (1,21) according to Claim 4, the step (8,28) being adjacent one end face of the element (2,22).

6. Apparatus (1,21) according to Claim 4 or 5, each arcuate portion (3,23) defining parts of two seats (4,24) for a respective sub-duct or grommet.

7. Apparatus (1,21) according to any preceding claim, each arcuate portion (3,23) and the boss (6,26) having a longitudinally extending through bore (10, 11), alignable with the respective bores of a similar element whereby to receive connectors (12).

8. Apparatus (1,21) according to Claim 7, the connectors (12) comprising nuts and bolts, one for each bore (10,11).

9. Apparatus (1,21) according to Claim 8, the connectors (12) also comprise two bearing plates (13, 213, 233) for each nut and bolt arrangement.

10. Apparatus (1,21) according to Claim 9, the arcuate portions (3,23) including a recess (214, 215, 233) of complementary shape to a bearing plate (13, 213, 233) and adapted to seat same.

11. A duct plug (9, 29) comprising apparatus (1,21) according to any preceding claim, assembled with a similar apparatus (1'21').

12. A duct, with a duct plug according to Claim 11 mounted therein.

## Patentansprüche

1. Vorrichtung (1, 21) zum Abdichten einer Rohrleitung, aufweisend ein flexibles Element (2, 22), welches zumindest einen Teil einer Dichtung (4, 24) für zumindest eine Nebenrohrleitung oder eine Gummitülle festlegt, und das dazu ausgelegt ist, mit einem ähnlichen Element zusammenzupassen, welches im Wesentlichen orthogonal zu ihm angeordnet ist, und das in einer Hauptrohrleitung einsetzbar ist und mit diesem radial in Eingriff gelangt, wobei das flexible Element (2, 22) gegenüberliegende bogenförmige Abschnitte (3, 23) aufweist, von denen jeder einen bogenförmigen Körper und einen angebundenen Schaft (5, 25) umfasst, der mit einem integralen zentralen Vorsprung (6, 26) verbunden ist, um ein einheitliches Element bereitzustellen.

2. Vorrichtung (1, 21) nach Anspruch 1, wobei das Element (2, 22) integral aus einem flexiblen und komprimierbaren Material gebildet ist.

3. Vorrichtung (1, 21) nach Anspruch 1 oder 2, aufweisend einen Stufenbegrenzungsrand (7, 27), durch welchen das Element (2, 22) in der Lage ist, mit einem ähnlichen Element (2, 22) zusammenzupassen.

4. Vorrichtung (1, 21) nach Anspruch 3, wobei eine Stufe (8, 28) in Längsrichtung des Rands (7, 27) vorgesehen ist.

5. Vorrichtung (1, 21) nach Anspruch 4, wobei die Stufe (8, 28) benachbart zu einer Stirnseite des Elements (2, 22) vorgesehen ist.

6. Vorrichtung (1, 21) nach Anspruch 4 oder 5, wobei jeder bogenförmige Abschnitt (3, 23) Teile von zwei Sitzen (4, 24) für eine jeweilige Nebenrohrleitung bzw. eine Gummitülle festlegt.

7. Vorrichtung (1, 21) nach einem der vorangehenden Ansprüche, wobei jeder bogenförmige Abschnitt (3, 23) und der Vorsprung (6, 26) ein in Längsrichtung verlaufendes Durchgangsloch (10, 11) aufweist, das mit den jeweiligen Bohrungen ähnlicher Elemente ausrichtbar ist, um Verbindungselemente (12) aufzunehmen.

8. Vorrichtung (1, 21) nach Anspruch 7, wobei die Verbindungselemente (12) Muttern und Bolzen, jeweils eine bzw. einen für jede Bohrung (10, 11) umfassen.

9. Vorrichtung (1, 21) nach Anspruch 8, wobei die Verbindungselemente (12) außerdem zwei Lagerplatten (13, 213, 233) für jede Mutter- und Bolzenanordnung umfassen.

10. Vorrichtung (1, 21) nach Anspruch 9, wobei die bogenförmigen Abschnitte (3, 23) eine Eintiefung (214, 215, 233) einer Form komplementär zu einer Lagerplatte (13, 213, 233) aufweisen, wobei die Eintiefung als Aufnahme für die Lagerplatte ausgelegt ist.

11. Rohrleitungsstopfen (9, 29), aufweisend eine Vorrichtung (1, 21) nach einem der vorangehenden Ansprüche, zusammengebaut mit einer ähnlichen Vorrichtung (1', 21').

12. Rohrleitung mit einem Rohrzapfen nach Anspruch 11, der in der Rohrleitung angebracht ist.

## Revendications

1. Dispositif (1, 21) pour fermer de façon étanche un conduit, comprenant un élément flexible (2, 22) qui définit au moins une partie d'un joint d'étanchéité (4, 24) pour au moins un conduit secondaire ou une bague et qui est adapté pour s'accoupler à un élément similaire disposés essentiellement perpendiculairement à l'élément flexible, et destiné à être inséré dans un conduit principal et à contacter radialement ce dernier, l'élément flexible (2, 22) comportant des parties opposées courbes (3, 23), dont chacune comprend un corps courbe et une tige dépendante (5, 25) raccordée à un bossage central solidaire (6, 26), de manière à former un élément unitaire.

2. Dispositif (1, 21) selon la revendication 1, l'élément (2, 22) étant formé d'un seul tenant en un matériau flexible et compressible.

3. Dispositif (1, 21) selon la revendication 1 ou la revendication 2, comprenant un bord limite étagé (7, 27), au moyen duquel l'élément (2, 22) est adapté pour être accouplé à un élément similaire (2, 22).

4. Dispositif (1, 21) selon la revendication 3, une partie étagée (8, 28) étant prévue longitudinalement sur le bord (7, 27).

5. Dispositif (1, 21) selon la revendication 4, la partie étagée (8, 28) étant adjacente à une face d'extrémité de l'élément (2, 22).

6. Dispositif (1, 21) selon la revendication 4 ou 5, chaque partie courbe (3, 23) définissant des parties de deux sièges (4, 24) pour un sous-conduit respectif ou une bague respective.

7. Dispositif (1, 21) selon l'une quelconque des revendications précédentes, chaque partie courbe (3, 23) et le bossage (6, 26) possédant un perçage traversant longitudinal (10, 11) pouvant être aligné avec les perçages respectifs d'un élément similaire de manière à recevoir des raccords (12).

8. Dispositif (1, 21) selon la revendication 7, les raccords (12) comprenant des écrous et des boulons, un pour chaque perçage (10, 11).

9. Dispositif (1, 21) selon la revendication 8, les raccords (12) comprenant également deux plaques de palier (13, 213, 233) pour chaque ensemble à écrou et boulon.

10. Dispositif (1, 21) selon la revendication 9, les parties courbes (3, 23) incluant un renfoncement (214, 215, 233) ayant une forme complémentaire d'une plaque de palier (13, 213, 233) et adapté pour supporter cette plaque.

11. Bouchon (9, 29) pour conduit comprenant un dispositif (1, 21) selon l'une quelconque des revendications précédentes, assemblé avec un dispositif similaire (1', 21').

12. Conduit comportant un bouchon de conduit selon la revendication 11, monté dans le conduit.
